# EUROPEAN PATENT APPLICATION

(11) **EP 1 355 081 A1**
(43) Date of publication of application: **22.10.2003**
(21) Application number: 03251778.1
(22) Date of filing: 21.03.2003
(51) Int. Cl.: F16F 9/46

(54) **Shock absorber**

(30) Priority: 16.04.2002 US 123706
(71) Applicant: Arvin Technologies, Inc., Troy, MI 48084 (US)
(72) Inventor: Barbison, James, Brampton, Ontario L6Z 4C8 (CA); Erickson, Kevin, Etobicoke, Ontario M9B 6L4 (CA); Weber, Arnett, Mississauga, Ontario L5G 1L6 (CA); Farewell, Ronald, Mississauga, Ontario L5N 3R9 (CA); Coury, Richard, Rochester Hills, Michigan 48309 (US); King, Thomas, Milton, Ontario L5G 1L6 (CA); Bell, Stephen, Guelph, Ontario M8W 1N8 (CA); Goncalves, Nelson, Mississauga, Ontario M8W 1N8 (CA)
(74) Representative: Jones, John Bryn

(57) **Abstract**

A shock absorber (10) is provided that includes a housing (12) having an inner wall (14) defining a working fluid chamber (16) and an outer wall (18) spaced outwardly from the inner wall defining a fluid reservoir (20). Either a compression head (24) or an inner cylinder head (26) may be arranged at an end of the housing. The head extends radially from a first portion (32) interior of the inner wall to a second portion (34) exterior of the inner wall with the head separating the working fluid chamber and the fluid reservoir. The head includes a passageway (36) extending between the first and second portions fluidly interconnecting the working fluid chamber and the fluid reservoir. A valve (38) is disposed about the inner wall and is arranged in the fluid reservoir. The valve has an annular sealing portion (40) adjacent to the second portion for obstructing fluid flow through the passageway in a closed position and spaced from the second portion in an open position. A toroidal solenoid (44) has a central opening (46) with the inner wall disposed within the central opening. The solenoid concludes an electric coil (45) generating magnetic flux on either the inner wall or the valve for generating a closing force against the second portion with the sealing portion. Alternatively, the valve and toroidal solenoid may be arranged outside the fluid reservoir about either the piston rod or (30) the lower mount.

## Description

### BACKGROUND OF THE INVENTION

This invention relates to a shock absorber in particular with adjustable damping, and more particularly, the invention relates to a toroidal solenoid and valve assembly to provide adjustable damping for a shock absorber.

Vehicles utilize shock absorbers to dampen vibrations and shocks experienced by the vehicle. Variations in payload and ground conditions may effect vehicle control and handling. It is desirable to selectively adjust a damping force in a shock absorber to improve vehicle control and handling in response to these variables.

Numerous adjustable designs have been proposed in the prior art for controlling a valve that regulates the fluid flow through a portion of the shock absorber to adjust the damping characteristic. For example, the piston includes fluid passageways that regulate the fluid flow through the piston. A valve may be used in connection with the fluid passageways to change the flow therethrough. A conventional linear solenoid has been used to open and close the valve. However, a passage must be formed in the piston rod to route the wires to the solenoid to connect the solenoid to the controls. Utilizing a hollow piston rod complicates the shock absorber design and adds cost to the absorber.

Another proposed design utilizes a valve plunger in the compression head. A solenoid is arranged at the end of the inner tube to manipulate the plunger shaft and open and close the valve. However, the placement and configuration of the solenoid and valve has been limited to the compression head and has significantly increased the dead length of the shock absorber, which is undesirable. Therefore, what is needed is a solenoid and adjustable valve assembly to which the wires may be routed to easily without increasing the dead length of the shock absorber.

### SUMMARY OF THE INVENTION AND ADVANTAGES

The present invention provides a shock absorber including a housing having an inner wall defining a working fluid chamber and an outer wall spaced outwardly from the inner wall defining a fluid reservoir. A head is arranged at an end of the housing. The head extends radially from a first portion interior of the inner wall to a second portion exterior of the inner wall with the head separating the working fluid chamber and the fluid reservoir. The head includes a passageway extending between the first and second portions fluidly interconnecting the working fluid chamber and the fluid reservoir. A valve is disposed about the inner wall and is arranged in the fluid reservoir. The valve has an annular sealing portion adjacent to the second portion for obstructing fluid flow through the passageway in a closed position and spaced from the second portion in an open position. A toroidal solenoid has a central opening with the inner wall disposed within the central opening. The solenoid concludes an electric coil generating magnetic flux on either the inner wall or the valve for generating a closing force against the second portion with the sealing portion. Alternatively, the valve and toroidal solenoid may be arranged outside of the fluid reservoir about either the piston rod or the lower mount.

Accordingly, the above invention provides a solenoid and adjustable valve assembly to which the wires may be routed to easily without increasing the dead length of the shock absorber.

### BRIEF DESCRIPTION OF THE DRAWINGS

Other advantages of the present invention can be understood by reference to the following detailed description when considered in connection with the accompanying drawings wherein:
Figure 1 is a cross-sectional view of the present invention solenoid and valve assembly approximate to the inner cylinder head;
Figure 2 is an enlarged cross-sectional view of a first configuration of the present invention solenoid and valve assembly;
Figure 3 is an enlarged cross-sectional view of a second configuration of the present invention solenoid and valve assembly;
Figure 4 is an enlarged cross-sectional view of a third configuration of the present invention solenoid and valve assembly; and
Figure 5 is a cross-sectional view of a shock absorber depicting the present invention solenoid and valve assembly used in connection with the compression head.

### DETAILED DESCRIPTION OF THE PREFERRED EMBODIMENT

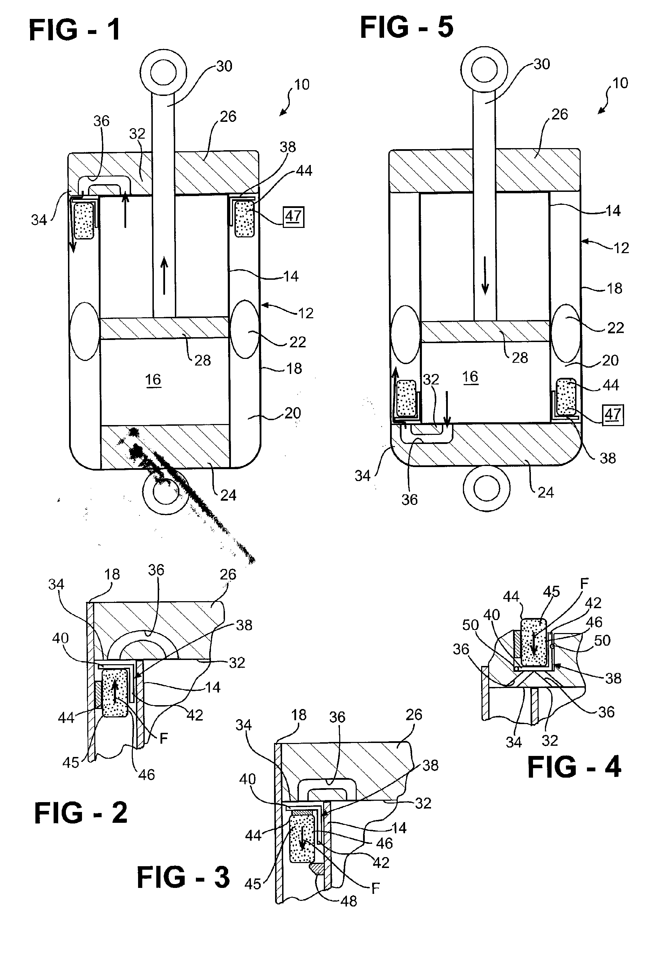

A shock absorber 10 is shown in Figure 1. The shock absorber 10 includes a housing 12 that has a cylindrical inner wall 14 and a cylindrical outer wall 18 surrounding the inner wall 14 to provide a twin tube shock absorber configuration. The inner wall 14 defines a working fluid chamber 16, and the outer wall 18 defines a fluid reservoir 20. A gas cell 22 is typically arranged within the reservoir 20 to prevent foaming of the hydraulic fluid.

An inner cylinder head 26 is arranged at one end of the housing 12 and supports the piston rod 30. A piston 28 is disposed within the working fluid chamber 16 and is connected to the piston rod 30. A compression head 24 is secured at an end of the housing 12 opposite the inner cylinder head 26. The heads 24, 26 and piston 28 typically include fluid passageways that partially define the overall damping characteristics of the absorber 10. The inner cylinder head 26 may include passageways connecting the working fluid chamber 16 and reservoir 20 to control damping characteristics during the rebound stroke, which is indicated by the upward arrow in Figure 1. Similarly, the compression head 24 may include fluid passageways connecting the working fluid chamber 16 and reservoir 20 to control the damping characteristics during the compression stroke in which the piston 28 moves toward the compression at 24.

The inner cylinder head 26 has a first portion 32 arranged interiorly of the inner wall 14 and a second portion 34 arranged exteriorly of the inner wall 14. Together the portions 32 and 34 separate the working fluid chamber 16 and the reservoir 20 from one another. A passageway 36 may be formed in the inner cylinder head 26 to interconnect the working fluid chamber 16 and reservoir 20 to provide damping during the recoil stroke. However, by utilizing a passageway without a valve, damping may not be adjusted. To this end, a valve with an actuator must be used to meter or control the flow of fluid through the passageway 36.

The present invention utilizes a valve 38 with an annular sealing portion arranged in the reservoir 20 adjacent to the passageway 36. A toroidal solenoid 44 may be arranged in the reservoir 20 to move to apply a closing force F against the second portion 34 to seal the passageway 36, as shown in Figure 2. The solenoid 44 may be actively controlled to change the damping by varying the closing force F in response to vehicle conditions. The toroidal solenoid 44 may be secured to the outer wall 18. The valve 38 may further include a cylindrical wall portion 42 from which the annular sealing portion 40 extends radially outwardly. The cylindrical wall portion 42 is disposed within a central opening 46 of the solenoid 44. The solenoid 44 includes an electric coil 45 that receives current from a controller 47 (shown in Figure 1) that generates a magnetic field. The direction of the magnetic field determines the direction of a magnetic flux that acts on the cylindrical wall portion 42 to move the valve 38 toward the second portion 34 and generate the closing force F. The magnitude of the magnetic flux corresponds to the magnitude of the closing force F. The greater the closing force F, the more difficult it will be for the fluid from the working fluid chamber 16 to flow through the passageway 36 past the valve 38 into the reservoir 20 thereby providing increased damping. Conversely, the closing force may be reduced to reduce damping.

Another embodiment of the present invention is shown in Figure 3. The solenoid 44 may be secured to the valve 38. A retainer collar 48 may be secured to the inner wall 14. The direction of the magnetic field is reversed from the configuration shown in Figure 2 to generate a magnetic flux acting in an opposite direction on the inner wall 14 to move the solenoid 44 and valve 38 toward the second portion 34. The collar 48 maintains the location of the solenoid 44 and valve 38 when the electric coil 45 is de-energized.

The embodiments shown in Figures 2 and 3 depict the solenoid 44 and valve 38 disposed within the reservoir 20. However, the solenoid 44 and valve 38 may also be arranged exteriorly of the reservoir 20, for example about the rod or lower absorber mount, without significantly increasing the dead length of the absorber 10. Referring to Figure 4, the solenoid 44 may be secured to the inner cylinder head 26 and the cylindrical wall portion 42 may be disposed within the central opening 46 of the solenoid 44. A sealing assembly 50, which is intended to be highly schematic, seals the valve 38 relative to the inner cylinder head 26 to prevent leakage of hydraulic fluid.

Although the solenoid 44 and valve 38 of the present invention has been described relative to the inner cylinder head 26, it should also be understood that they may be used with the compression head 24, as shown in Figure 5. The solenoid 44 and valve 38 may be arranged in a manner similar to that described relative to Figures 2-4.

The invention has been described in an illustrative manner, and it is to be understood that the terminology that has been used is intended to be in the nature of words of description rather than of limitation. Obviously, many modifications and variations of the present invention are possible in light of the above teachings. It is, therefore, to be understood that within the scope of the appended claims the invention may be practiced otherwise than as specifically described.

## Claims

1. A shock absorber (10) comprising:
a housing (12) having an inner wall (14) defining a working fluid chamber (16) and an outer wall (18) spaced outwardly from said inner wall defining a fluid reservoir (20);
a head arranged at one end of said housing extending radially from a first portion (32) interior of said inner wall (14) to a second portion (34) exterior of said inner wall (14) with said head separating said working fluid chamber and said fluid reservoir, said head including a passageway (36) extending between said first and second portions fluidly interconnecting said working fluid chamber and said fluid reservoir;
a valve (38) disposed about said inner wall and arranged in said fluid reservoir, said valve having an annular sealing portion (40) adjacent to said second portion (34) obstructing fluid flow through said passageway (36) in a closed position and spaced from said second portion in an open position; and
a toroidal solenoid (44) having a central opening with said inner wall (14) disposed within said central opening, said solenoid having an electric coil (45) generating magnetic flux on one of said inner wall (14) and said valve (38) generating a closing force against said second portion (34) with said sealing portion (40).

2. The shock absorber (10) according to claim 1, wherein said solenoid (44) is disposed in said reservoir (20).

3. The shock absorber according to any preceding claim, wherein said valve (38) includes a cylindrical wall portion (42) with said sealing portion (40) extending radially outwardly from said cylindrical wall portion, said cylindrical wall portion disposed within said central opening of said solenoid about said inner wall with said magnetic flux acting on said cylindrical wall portion to generate said closing force.

4. The shock absorber according to any preceding claim, wherein said solenoid (44) is secured to said outer wall (18).

5. The shock absorber according to any one of claims 1 to 3, wherein said solenoid is secured to said valve with said magnetic flux acting on said inner wall to generate said closing force, said solenoid movable relative to said inner wall.

6. The shock absorber according to claim 5, including a collar (48) secured to said inner wall adjacent to said solenoid (44) providing a stop for said solenoid.

7. A shock absorber (10) comprising:
a housing (12) having an inner wall (14) defining a working fluid chamber (16) and an outer wall (18) spaced outwardly from said inner wall defining a fluid reservoir (20);
a head rranged at one end of said housing extending radially from a first portion (32) interior of said inner wall (14) to a second portion (34) exterior of said inner wall (14) with said head separating said working fluid chamber and said fluid reservoir, said head including a passageway (36) extending between said first and second portions fluidly interconnecting said working fluid chamber and said fluid reservoir;
a valve (38) having an cylindrical wall portion and a sealing portion extending radially outwardly from said cylindrical wall portion (40) adjacent to said second portion (34) obstructing fluid flow through said passageway (36) in a closed position and spaced from said second portion in an open position; and
a toroidal solenoid (44) having a central opening with said cylindrical wall portion (42) disposed within said central opening, said solenoid having an electric coil generating magnetic flux on said cylindrical wall portion (42) generating a closing force against said second portion with said sealing portion (40).

8. The shock absorber according to claim 7, wherein said solenoid is secured to said head.

9. The shock absorber according to claim 7, wherein a seal assembly is arranged between said valve and said head.

10. The shock absorber according to claim 7, wherein said solenoid and valve are disposed within said fluid reservoir.

11. The shock absorber according to anypreceding claim, wherein said head is a compression head.

12. The shock absorber according to any one of claims 1 to 10, wherein said head is an inner cylinder head (26).
